# EUROPEAN PATENT APPLICATION

(11) **EP 4 650 047 A1**
(43) Date of publication of application: **19.11.2025**
(21) Application number: 23916254.8
(22) Date of filing: 21.12.2023
(51) Int. Cl.: B01J 23/63, B01D 53/94, B01J 35/57, F01N 3/10

(54) **EXHAUST GAS PURIFICATION CATALYST**

(30) Priority: 13.01.2023 JP 2023004091
(71) Applicant: Mitsui Mining & Smelting Co., Ltd., Shinagawa-ku Tokyo 141-8584 (JP)
(72) Inventor: ISAYAMA Akihiro, Ageo-shi, Saitama 362-0025 (JP); TAKEUCHI Ryo, Ageo-shi, Saitama 362-0025 (JP); WATANABE Tokuya, Ageo-shi, Saitama 362-0025 (JP); IWAKURA Hironori, Ageo-shi, Saitama 362-0025 (JP)
(74) Representative: Novagraaf Technologies
(86) International application number: PCT/JP2023/045934
(87) International publication number: WO 2024/150640

(57) **Abstract**

An object of the present invention is to provide an exhaust gas purification catalyst including a substrate, a first catalyst layer provided on the substrate, and a second catalyst layer provided on an upside of the first catalyst layer, wherein the first catalyst layer contains Pd, wherein the second catalyst layer contains Rh, and wherein the exhaust gas purification catalyst can suppress a decrease in exhaust gas purification performance after exposure to a high temperature environment and a decrease in exhaust gas purification performance after exposure to phosphorus, and the present invention provides an exhaust gas purification catalyst (1) including a substrate (10), a first catalyst layer (20) provided on the substrate (10), and a second catalyst layer (30) provided on an upside of the first catalyst layer (20), wherein the first catalyst layer (20) contains Pd, and wherein the second catalyst layer contains Rh and a complex oxide containing Ce, Zr, and Al, wherein the exhaust gas purification catalyst (1) satisfies at least one of the following conditions A and B:
(A) the first catalyst layer (20) contains Sr, and a content of Sr in terms of metal in the first catalyst layer (20) is 0.1% by mass or more, based on a mass of the first catalyst layer (20); and
(B) the second catalyst layer (30) contains Sr, and a content of Sr in terms of metal in the second catalyst layer (30) is 0.1% by mass or more, based on a mass of the second catalyst layer(30).

## Description

### TECHNICAL FIELD

The present invention relates to an exhaust gas purification catalyst.

### BACKGROUND ART

Exhaust gas emitted from an internal combustion engine of an automobile, a motorcycle or the like contains harmful components such as hydrocarbons (HC), carbon monoxide (CO) and nitrogen oxides (NOx). A catalyst containing a noble metal element such as Pt, Pd, or Rh is used to purify and detoxify those harmful components. Pt and Pd are mainly involved in oxidative purification of HC and CO, and Rh is mainly involved in reductive purification of NOx.

Pd is susceptible to poisoning by phosphorus (e.g., phosphorus in engine oil). As an exhaust gas purification catalyst capable of suppressing phosphorus-induced poisoning of Pd, an exhaust gas purification catalyst including a substrate, a first catalyst layer provided on the substrate, and a second catalyst layer provided on an upside of the first catalyst layer, wherein the first catalyst layer contains Pd, and wherein the second catalyst layer contains Rh, is known (e.g., Patent Documents 1 and 2).

### CITATION LIST

### PATENT DOCUMENTS

Patent Document 1: Japanese Patent Laid-Open No. 2011-136319
Patent Document 2: Japanese Patent Laid-Open No. 2016-185531

### SUMMARY OF THE INVENTION

### TECHNICAL PROBLEM

An exhaust gas purification catalyst is required to suppress a decrease in exhaust gas purification performance after exposure to a high temperature environment (of the exhaust gas purification performance after exposure to a high temperature environment, in particular, the exhaust gas purification performance in a low temperature environment immediately after start-up of an internal combustion engine), and a decrease in exhaust gas purification performance after exposure to phosphorus (e.g., phosphorus in engine oil) (of the exhaust gas purification performance after exposure to phosphorus, in particular, the exhaust gas purification performance in a low temperature environment immediately after start-up of an internal combustion engine). In the present specification, the term "low-temperature " means a temperature of preferably 500°C or less, more preferably 400°C or less, even more preferably 300°C or less, and the term "high temperature" means a temperature of preferably 700°C or more, more preferably 800°C or more, and even more preferably 900°C or more.

An object of the present invention is to provide an exhaust gas purification catalyst including a substrate, a first catalyst layer provided on the substrate, and a second catalyst layer provided on an upside of the first catalyst layer, wherein the first catalyst layer contains Pd, wherein the second catalyst layer contains Rh, and wherein the exhaust gas purification catalyst can suppress a decrease in exhaust gas purification performance after exposure to a high temperature environment (of the exhaust gas purification performance after exposure to a high temperature environment, in particular, the exhaust gas purification performance in a low temperature environment immediately after start-up of an internal combustion engine), and a decrease in exhaust gas purification performance after exposure to phosphorus (of the exhaust gas purification performance after exposure to phosphorus, in particular, the exhaust gas purification performance in a low temperature environment immediately after start-up of an internal combustion engine).

### SOLUTION TO PROBLEM

The present invention provides the following inventions.
[1] An exhaust gas purification catalyst, including a substrate, a first catalyst layer provided on the substrate, and a second catalyst layer provided on an upside of the first catalyst layer,
   wherein the first catalyst layer contains Pd,
   wherein the second catalyst layer contains Rh and a complex oxide containing Ce, Zr, and Al, and
   wherein the exhaust gas purification catalyst satisfies at least one of the following Conditions A and B:
      (A) the first catalyst layer contains Sr, and a content of Sr in terms of metal in the first catalyst layer is 0.1% by mass or more, based on a mass of the first catalyst layer; and
      (B) the second catalyst layer contains Sr, and a content of Sr in terms of metal in the second catalyst layer is 0.1% by mass or more, based on a mass of the second catalyst layer.
[2] The exhaust gas purification catalyst according to [1],
   wherein in Condition A, the content of Sr in terms of metal in the first catalyst layer is 0.1% by mass or more and 7.0% by mass or less, based on the mass of the first catalyst layer; and
   wherein in Condition B, the content of Sr in terms of metal in the second catalyst layer is 0.1% by mass or more and 7.0% by mass or less, based on the mass of the second catalyst layer.
[3] The exhaust gas purification catalyst according to [2],
   wherein in Condition A, the content of Sr in terms of metal in the first catalyst layer is 0.1% by mass or more and 4.0% by mass or less, based on the mass of the first catalyst layer; and
   wherein in Condition B, the content of Sr in terms of metal in the second catalyst layer is 0.1% by mass or more and 4.0% by mass or less, based on the mass of the second catalyst layer.
[4] The exhaust gas purification catalyst according to any one of [1] to [3], wherein the complex oxide contains La, and wherein a content of La in terms of La₂O₃ in the complex oxide is 1.0% by mass or more, based on a mass of the complex oxide.
[5] The exhaust gas purification catalyst according to any one of [1] to [4],
   wherein, in a case where the exhaust gas purification catalyst satisfies Condition A, the exhaust gas purification catalyst satisfies following Condition C:
      (C) a ratio of the content of Sr in terms of metal in the first catalyst layer based on the mass of the first catalyst layer to a content of the complex oxide in the second catalyst layer based on the mass of the second catalyst layer is 0.0010 or more and 0.0800 or less; and
   wherein, in a case where the exhaust gas purification catalyst satisfies Condition B, the exhaust gas purification catalyst satisfies following Condition D:
      (D) a ratio of the content of Sr in terms of metal in the second catalyst layer based on the mass of the second catalyst layer to a content of the complex oxide in the second catalyst layer based on the mass of the second catalyst layer is 0.0010 or more and 0.0800 or less.
[6] The exhaust gas purification catalyst according to any one of [1] to [5], wherein a content of the complex oxide in the second catalyst layer is 80.0% by mass or more, based on the mass of the second catalyst layer.
[7] The exhaust gas purification catalyst according to any one of [1] to [6], wherein a content of Al in terms of Al₂O₃ in the complex oxide is 30.0% by mass or more and 60.0% by mass or less, based on a mass of the complex oxide.
[8] The exhaust gas purification catalyst according to any one of [1] to [7], wherein the exhaust gas purification catalyst satisfies at least Condition A of Conditions A and B.

### ADVANTAGEOUS EFFECTS OF THE INVENTION

According to the present invention, there is provided an exhaust gas purification catalyst including a substrate, a first catalyst layer provided on the substrate, and a second catalyst layer provided on an upside of the first catalyst layer, wherein the first catalyst layer contains Pd, wherein the second catalyst layer contains Rh, and wherein the exhaust gas purification catalyst can suppress a decrease in exhaust gas purification performance after exposure to a high temperature environment (of the exhaust gas purification performance after exposure to a high temperature environment, in particular, the exhaust gas purification performance in a low temperature environment immediately after start-up of an internal combustion engine), and a decrease in exhaust gas purification performance after exposure to phosphorus (of the exhaust gas purification performance after exposure to phosphorus, in particular, the exhaust gas purification performance in a low temperature environment immediately after start-up of an internal combustion engine).

### BRIEF DESCRIPTION OF THE DRAWINGS

Figure 1 is a partial end view showing a state in which an exhaust gas purification catalyst according to an embodiment of the present invention is disposed in an exhaust gas path of an internal combustion engine.
Figure 2 is an end view taken along line A-A of Figure 1.
Figure 3 is an enlarged view of a region denoted by the reference sign R in Figure 2.
Figure 4 is an end view taken along line B-B of Figure 1.

### DETAILED DESCRIPTION OF THE INVENTION

### << Exhaust gas purification catalyst >>

An exhaust gas purification catalyst of the present invention will be described below.

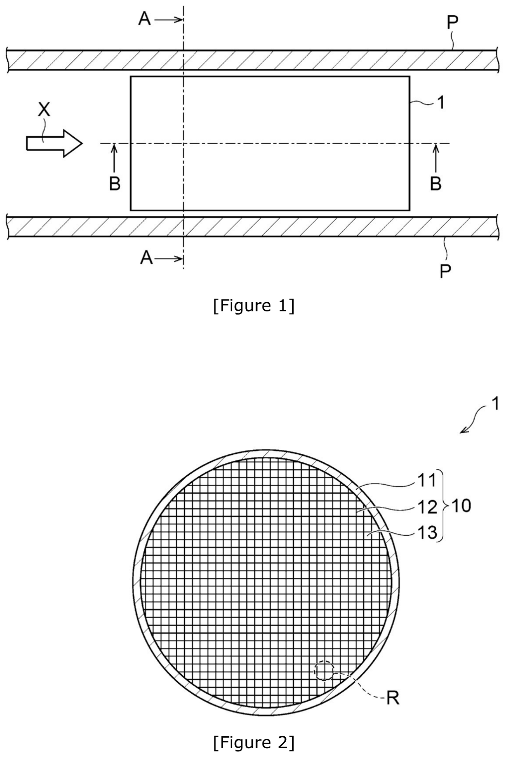

Hereinafter, an exhaust gas purification catalyst 1 (hereinafter, which may be referred to as a "catalyst 1") according to an embodiment of the present invention will be described with reference to Figures 1 to 4.

As shown in Figure 1, the catalyst 1 is disposed in an exhaust gas path in an exhaust pipe P of an internal combustion engine. The internal combustion engine is, for example, a gasoline engine. Exhaust gas emitted from the internal combustion engine flows through the exhaust gas path in the exhaust pipe P from one end to the other end of the exhaust pipe P, and is purified by the catalyst 1 provided in the exhaust pipe P. In the drawings, the exhaust gas flow direction is denoted by the reference sign X. In the present specification, an upstream position in the exhaust gas flow direction X may be referred to as an "exhaust gas inflow side" or "upstream side", and a downstream position in the exhaust gas flow direction X may be referred to as an "exhaust gas outflow side" or "downstream side".

In the exhaust gas path of the exhaust pipe P, another exhaust gas purification catalyst may be disposed on the upstream and/or downstream side of the catalyst 1.

As shown in Figures 2 to 4, the catalyst 1 includes a substrate 10, a first catalyst layer 20 provided on the substrate 10, and a second catalyst layer 30 provided on an upside of the first catalyst layer 20.

### < Substrate >

Hereinafter, the substrate 10 will be described.

The material constituting the substrate 10 can be appropriately selected from known materials. Examples of the material constituting the substrate 10 include a ceramic material and a metal material. The ceramic material is preferred. Examples of the ceramic material include carbide ceramics such as silicon carbide, titanium carbide, tantalum carbide and tungsten carbide, nitride ceramics such as aluminum nitride, silicon nitride, boron nitride and titanium nitride, oxide ceramics such as alumina, zirconia, cordierite, mullite, zircon, aluminum titanate and magnesium titanate, and the like. Examples of the metal material include alloys such as stainless steel.

As shown in Figures 2 to 4, the substrate 10 includes a tubular member 11, a partition wall 12 provided in the tubular member 11, and cells 13 separated from one another by the partition wall 12. The substrate 10 preferably has a honeycomb structure.

As shown in Figure 2, the tubular member 11 defines the external shape of the substrate 10, and the axial direction of the tubular member 11 coincides with the axial direction of the substrate 10. As shown in Figure 2, the tubular member 11 has a hollow cylindrical shape, but may have another shape such as a hollow elliptic cylindrical shape or a polygonal tubular shape.

As shown in Figures 2 to 4, the partition wall 12 is present between adjacent cells 13, whereby the adjacent cells 13 are separated from each other by the partition wall 12. The partition wall 12 may have a porous structure allowing exhaust gas to pass through. The thickness of the partition wall 12 is, for example, 20 µm or more and 1500 µm or less.

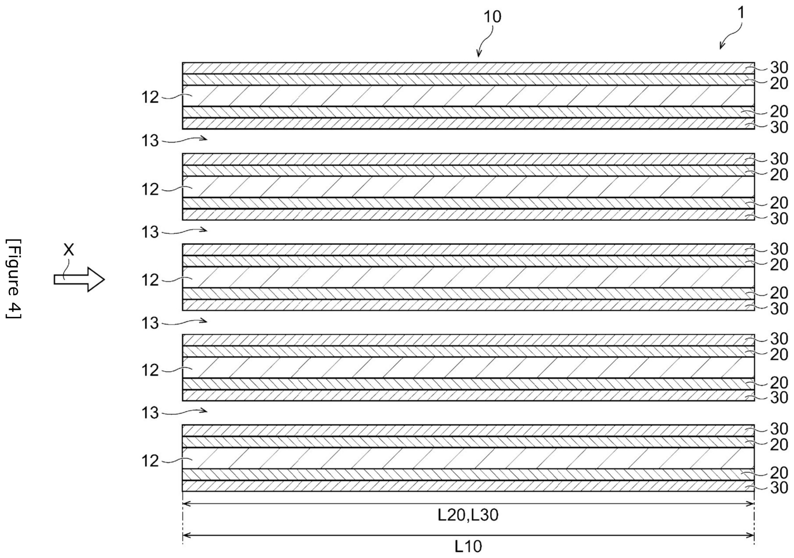

As shown in Figure 4, each cell 13 extends in the exhaust gas flow direction X and has an end on the exhaust gas inflow side and an end on the exhaust gas outflow side.

As shown in Figure 4, the end on the exhaust gas inflow side and the end on the exhaust gas outflow side of each cell 13 are both open. Therefore, the exhaust gas that has flowed in from the end (opening) on the exhaust gas inflow side of each cell 13 flows out from the end (opening) on the exhaust gas outflow side of each cell 13. Such a mode is called a flow-through type.

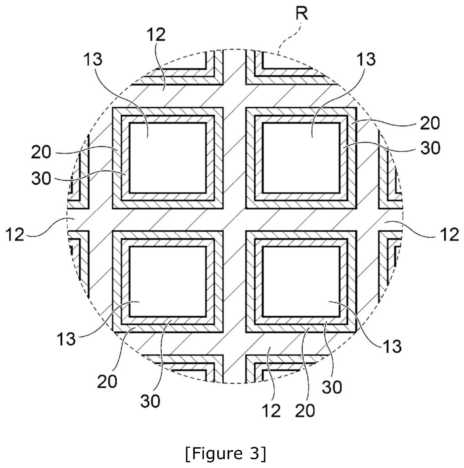

As shown in Figures 2 and 3, the shape in a plan view of the end (opening) on the exhaust gas inflow side of each cell 13 is rectangle, but may be another shape such as hexagon or octagon. The same applies to the shape in the plan view of the end (opening) on the exhaust gas outflow side of each cell 13.

The cell density per square inch of the substrate 10 is, for example, 100 cells or more and 1000 cells or less. The cell density per square inch of the substrate 10 means the total number of the cells 13 per square inch in a cross section obtained by cutting the substrate 10 by a plane perpendicular to the exhaust gas flow direction X.

The volume of the substrate 10 is, for example, 0.1L or more and 20 L or less. The volume of the substrate 10 means the apparent volume of the substrate 10. For example, in the case where the substrate 10 is in a form of a cylinder, the outer diameter of the substrate 10 is 2r, and the length of the substrate 10 is L₁₀, the volume of the substrate 10 is represented by the formula: Volume of substrate 10 = π x r² x L₁₀.

### < First catalyst layer >

Hereinafter, the first catalyst layer 20 will be described.

As shown in Figures 3 and 4, the first catalyst layer 20 is provided on the surface on the cell 13 side of the partition wall 12. The expression "the surface on the cell 13 side of the partition wall 12" means the outer surface of the partition wall 12, the outer surface extending in the exhaust gas flow direction X. The first catalyst layer 20 may be provided directly on the surface on the cell 13 side of the partition wall 12, or may be provided via another layer on the surface on the cell 13 side of the partition wall 12. Usually, the first catalyst layer 20 is provided directly on the surface on the cell 13 side of the partition wall 12.

The first catalyst layer 20 may be composed of a structure rising from the surface on the cell 13 side of the partition wall 12 toward the cell 13 side (hereinafter referred to as a "rising structure"), or may be composed of a structure present inside the partition wall 12 (hereinafter referred to as an "internal structure"), or may have both of the rising structure and the internal structure. The expression "the first catalyst layer 20 provided on the substrate 10" encompasses an embodiment wherein the first catalyst layer 20 is composed of the rising structure, an embodiment wherein the first catalyst layer 20 is composed of the internal structure, and an embodiment wherein the first catalyst layer 20 has both the rising structure and the internal structure.

As shown in Figure 4, the first catalyst layer 20 extends from the end on the exhaust gas inflow side of the partition wall 12 to the end on the exhaust gas outflow side of the partition wall 12 along the exhaust gas flow direction X. The first catalyst layer 20 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after calcination) of the first catalyst layer 20 per unit volume of the portion of the substrate provided with the first catalyst layer 20 is preferably 50 g/L or more and 230 g/L or less, more preferably 70 g/L or more and 180 g/L or less, and even more preferably 80 g/L or more and 150 g/L or less. The mass of the first catalyst layer 20 per unit volume of the portion of the substrate 10 provided with the first catalyst layer 20 is calculated from the formula: (Mass of first catalyst layer 20) / ((Volume of substrate 10) × (Average length L₂₀ of first catalyst layer 20 / Length L₁₀ of substrate 10)). In the present specification, the term "length" means the dimension in the axial direction of the substrate 10, unless otherwise defined.

In the present specification, the expression "the mass of the first catalyst layer 20" means the total of the masses of all metal elements contained in the first catalyst layer 20, wherein the mass(es) of a noble metal element(s) is/are determined in terms of metal, and wherein the mass(es) of a metal element(s) other than the noble metal element(s) is/are determined in terms of oxide. In other words, the expression "the mass of the first catalyst layer 20" means the calculated mass obtained by totalizing the mass(es) of the noble metal element(s) contained in the first catalyst layer 20 in terms of metal and the mass(es) of the metal element(s) other than the noble metal element(s) contained in the first catalyst layer 20 in terms of oxide. The term "metal element" encompasses metalloid elements such as Si, B, and the like.

In the present specification, the term "noble metal element" encompasses Pt (platinum element), Pd (palladium element), Rh (rhodium element), Ru (ruthenium element), Os (osmium element), Ir (iridium element), Au (gold element), and Ag (silver element).

In the present specification, an oxide of a rare earth element excluding Ce, Pr, and Tb means a sesqui oxide (M₂O₃, M represents a rare earth element other than Ce, Pr, and Tb), an oxide of Ce means CeO₂, an oxide of Pr means to Pr₆O₁₁, an oxide of Tb means Tb₄O₇, an oxide of Al means Al₂O₃, an oxide of Zr means ZrO₂, an oxide of Si means SiO₂, an oxide of B means B₂O₃, an oxide of Cr means Cr₂O₃, an oxide of Mg means MgO, an oxide of Ca means CaO, an oxide of Sr means SrO, an oxide of Ba means BaO, an oxide of Fe means Fe₃O₄, an oxide of Mn means Mn₃O₄, an oxides of Ni means NiO, an oxide of Ti means TiO₂, an oxide of Zn means ZnO, and an oxide of Sn means SnO₂.

One example of the method of measuring the average length L₂₀ of the first catalyst layer 20 is as follows:

A sample extending in the axial direction of the substrate 10 and having the same length as the length L₁₀ of the substrate 10 is cut out from the catalyst 1. The sample is, for example, in the form of a cylinder having a diameter of 25.4 mm. The value of the diameter of the sample can be changed as necessary. In the case where the first catalyst layer 20 extends from the end on the exhaust gas inflow side of the partition wall 12 along the exhaust gas flow direction X, the sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas inflow side of the sample. In the case where the first catalyst layer 20 extends from the end on the exhaust gas outflow side of the partition wall 12 along the direction opposite to the exhaust gas flow direction X, the sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample. In each case, the length of each cut piece is 5 mm. The composition of each cut piece is analyzed using an X-ray fluorescence analyzer (XRF) (e.g., an energy dispersive X-ray analyzer (EDX), a wavelength dispersive X-ray analyzer (WDX) or the like), an inductively coupled plasma emission spectrophotometer (ICP-AES), a scanning electron microscopy-energy dispersive X-ray spectroscopy (SEM-EDX) or the like, and it is confirmed whether or not each cut piece includes part of the first catalyst layer 20, based on the composition of each cut piece.

The compositional analysis is not necessarily performed for a cut piece that apparently includes part of the first catalyst layer 20. For example, it is possible to confirm whether or not each cut piece includes part of the first catalyst layer 20, by observing a cross section thereof using a scanning electron microscope (SEM), an electron probe microanalyzer (EPMA) or the like. At the time of observing the cross section, element mapping of the cross section may be performed.

After confirming whether or not each cut piece includes part of the first catalyst layer 20, the length of the first catalyst layer 20 included in the sample is calculated based on the following formula: Length of first catalyst layer 20 included in sample = 5 mm x (Number of cut pieces each including part of first catalyst layer 20)

For example, in the case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 x k) mm.

One example of the method of more specifically measuring the length of the first catalyst layer 20 included in the sample is as follows:
The k-th cut piece (in the case where the first catalyst layer 20 extends from the end on the exhaust gas inflow side of the partition wall 12 along the exhaust gas flow direction X, the k-th cut piece is a cut piece closest to the end on the exhaust gas outflow side of the sample, among the cut pieces each including part of the first catalyst layer 20, and in the case where the first catalyst layer 20 extends from the end on the exhaust gas outflow side of the partition wall 12 along the direction opposite to the exhaust gas flow direction X, the k-th cut piece is a cut piece closest to the end on the exhaust gas inflow side of the sample, among the cut pieces each including part of the first catalyst layer 20) is cut in the axial direction of the substrate 10, and part of the first catalyst layer 20 existing in the resulting cross section is observed using SEM, EPMA, or the like, to measure the length of part of the first catalyst layer 20 included in the k-th cut piece. Thereafter, the length of the first catalyst layer 20 included in the sample is calculated based on the following formula: Length of first catalyst layer 20 included in sample = (5 mm x (k-1)) + (Length of part of first catalyst layer 20 included in k-th cut piece)

For 8 to 16 samples arbitrarily cut out from the catalyst 1, the length of the first catalyst layer 20 included in each sample is calculated, and the average value of the measured lengths is defined as the average length L₂₀ of the first catalyst layer 20.

The first catalyst layer 20 contains Pd as a catalytically-active component. Pd contained in the first catalyst layer 20 is in the form capable of functioning as a catalytically-active component, for example, in the form of a catalytically-active component containing Pd, such as metal Pd, an alloy containing Pd, a compound containing Pd (e.g., an oxide of Pd), or the like. From the viewpoint of improving the exhaust gas purification performance, it is preferable that the catalytically-active component containing Pd is in particulate form.

From the viewpoint of balancing the exhaust gas purification performance and the cost, the content of Pd in terms of metal in the first catalyst layer 20 is preferably 0.010% by mass or more and 20% by mass or less, more preferably 0.050% by mass or more and 15% by mass or less, and even more preferably 0.10% by mass or more and 10% by mass or less, based on the mass of the first catalyst layer 20.

The first catalyst layer 20 may contain a noble metal element other than Pd, as a catalytically-active component. Examples of the noble metal element other than Pd include Pt, Rh, Ir, Ru, Os, Au, Ag, and the like. The noble metal element other than Pd contained in the first catalyst layer 20 is in the form capable of functioning as a catalytically-active component, for example, in the form of a catalytically-active component containing the noble metal element other than Pd, such as metal, an alloy containing the noble metal element, a compound containing the noble metal element (e.g., an oxide of the noble metal element), or the like. From the viewpoint of improving the exhaust gas purification performance, it is preferable that the catalytically-active component containing the noble metal element other than Pd is in particulate form.

In the case where the first catalyst layer 20 contains Pd and the noble metal element other than Pd, Pd and the noble metal element other than Pd may form an alloy, thereby decreasing the active sites of Pd participating in exhaust gas purification performance. Accordingly, it is preferable that the first catalyst layer 20 is substantially free from the noble metal element other than Pd.

The expression "the first catalyst layer 20 is substantially free from the noble metal element other than Pd" means that the content of the noble metal element other than Pd in terms of metal in the first catalyst layer 20 is preferably 0.050% by mass or less, and more preferably 0.010% by mass or less, based on the mass of the first catalyst layer 20. The lower limit is zero. The expression "the content of the noble metal element other than Pd in terms of metal in the first catalyst layer 20" means, in the case where the first catalyst layer 20 contains one noble metal element other than Pd, the content of the one noble metal element other than Pd in terms of metal, and means, in the case where the first catalyst layer 20 contains two or more noble metal elements other than Pd, the total content of the two or more noble metal elements other than Pd in terms of metal.

The content of each metal element in terms of metal in the first catalyst layer 20 is determined from the following formula: (Mass of each metal element in terms of metal in first catalyst layer 20) / (Mass of first catalyst layer 20) x 100. For example, the content of Pd in terms of metal in the first catalyst layer 20 is determined from the following formula: (Mass of Pd in terms of metal in first catalyst layer 20) / (Mass of first catalyst layer 20) x 100.

In the case where the composition of raw materials used for forming the first catalyst layer 20 is known, the content of each metal element in terms of metal in the first catalyst layer 20 can be determined from the composition of raw materials used for forming the first catalyst layer 20.

In the case where the composition of raw materials used for forming the first catalyst layer 20 is not known, the content of each metal element in terms of metal in the first catalyst layer 20 can be determined using a conventional method such as scanning electron microscopy-energy dispersive X-ray spectroscopy (SEM-EDX). A specific example is as mentioned below.

Elemental analysis using a conventional method such as SEM-EDX is performed on a sample obtained from the first catalyst layer 20 to identify the types of constituent elements of the entire sample and determine the content (% by mass) of each identified element. From each of 10 fields of view in SEM, the content (% by mass) of each metal element is determined. The average of the contents (% by mass) of each metal element obtained from the 10 fields of view is defined as the content (% by mass) of each metal element in the first catalyst layer 20.

It is preferable that the first catalyst layer 20 contains one or two or more carriers, and that at least part of a catalytically-active component is supported on the one or two or more carriers.

The expression that "at least part of a catalytically-active component is supported on a carrier" means the state where at least part of the catalytically-active component is physically or chemically adsorbed or retained in the outer surface of the carrier and/or the inner surface of pores of the carrier. Whether or not at least part of a catalytically-active component is supported on a carrier can be confirmed using, for example, SEM-EDX or the like. Specifically, when an element mapping obtained by analyzing a cross section of the first catalyst layer 20 by SEM-EDX shows that at least part of a catalytically-active component and a carrier exist in the same region, at least part of the catalytically-active component can be judged as supported on the carrier.

Each carrier can be selected from, for example, an inorganic oxide. The inorganic oxide is, for example, in particulate form. From the viewpoint of improving the supportability for a catalytically-active component, the inorganic oxide is preferably porous. The inorganic oxide may have oxygen storage capacity (OSC), or may not have oxygen storage capacity. In the present specification, the inorganic oxide having OSC may be referred to as an "OSC material". The inorganic oxide used as a carrier is distinct from an inorganic oxide used as a binder (e.g., an inorganic oxide binder such as an alumina binder, a zirconia binder, a titania binder, a silica binder, or the like).

Examples of the inorganic oxide include an Al-based oxide, a Ce-based oxide, a Ce-Zr-based complex oxide, an oxide of a rare earth element other than Ce, zirconia (ZrO₂), silica (SiO₂), titania (TiO₂), zeolite (aluminosilicate), an oxide based on MgO, ZnO, or SnO₂, and the like.

The Al-based oxide means an oxide containing Al, wherein Al is the element with the highest mass-based content among the element other than O which constitute the oxide. It should be noted that an oxide falling within the scope of the Ce-Zr-based complex oxide is excluded from the scope of the Al-based oxide.

The Ce-based oxide means an oxide containing Ce, wherein Ce is the element with the highest mass-based content among the elements other than O which constitute the oxide. It should be noted that an oxide falling within the scope of the Ce-Zr-based complex oxide is excluded from the scope of the Ce-based oxide.

The Ce-Zr-based complex oxide means a complex oxide containing Ce and Zr, wherein the content of Ce in terms of CeO₂ in the complex oxide is 5.0% by mass or more and 95.0% by mass or less, based on the mass of the complex oxide, and wherein the content of Zr in terms of ZrO₂ in the complex oxide is 5.0% by mass or more and 95.0% by mass or less, based on the mass of the complex oxide, and wherein the content of Al in terms of Al₂O₃ in the complex oxide is less than 5.0% by mass, based on the mass of the complex oxide.

The content of each element in terms of oxide in the Al-based oxide, the Ce-based oxide, or the Ce-Zr-based complex oxide can be determined in the same manner as the content of each element in terms of oxide in the below-mentioned Ce-Zr-Al-based complex oxide.

The first catalyst layer 20 may contain other components such as a binder, a stabilizer, and the like. Examples of the binder include inorganic oxide binders such as alumina sol, ceria sol, zirconia sol, titania sol, and silica sol.

### < Second catalyst layer >

Hereinafter, the second catalyst layer 30 will be described.

As shown in Figures 3 and 4, the second catalyst layer 30 is provided on the upside of the first catalyst layer 20.

The expression that "the second catalyst layer 30 is provided on the upside of the first catalyst layer 20" means that part or the whole of the second catalyst layer 30 is present on, of two main surfaces of the first catalyst layer 20, the main surface opposite to the main surface on the partition wall 12 side. The expression "the main surface of the first catalyst layer 20" means the outer surface of the first catalyst layer 20, the outer surface extending in the exhaust gas flow direction X. The second catalyst layer 30 may be provided directly on the main surface of the first catalyst layer 20, or may be provided via another layer on the main surface of the first catalyst layer 20. Usually, the second catalyst layer 30 is provided directly on the main surface of the first catalyst layer 20. The second catalyst layer 30 may be provided to cover part or the whole of the main surface of the first catalyst layer 20. The expression "the second catalyst layer 30 provided on the upside of the first catalyst layer 20" encompasses an embodiment wherein the second catalyst layer 30 is provided directly on the main surface of the first catalyst layer 20, and an embodiment wherein the second catalyst layer 30 is provided via another layer on the main surface of the first catalyst layer 20.

As shown in Figure 4, the second catalyst layer 30 extends from the end on the exhaust gas inflow side of the partition wall 12 to the end on the exhaust gas outflow side of the partition wall 12 along the exhaust gas flow direction X. The second catalyst layer 30 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after calcination) of the second catalyst layer 30 per unit volume of the portion of the substrate 10 provided with the second catalyst layer 30 is preferably 20 g/L or more and 150 g/L or less, more preferably 50 g/L or more and 120 g/L or less, and even more preferably 70 g/L or more and 100 g/L or less. The mass of the second catalyst layer 30 per unit volume of the portion of the substrate 10 provided with the second catalyst layer 30 is calculated from the following formula: (Mass of second catalyst layer 30) / ((Volume of substrate 10) x (Average length L₃₀ of second catalyst layer 30 / Length L₁₀ of substrate 10)).

The above descriptions with respect to the mass of the first catalyst layer 20 are also applied to the second catalyst layer 30. Upon application, "the first catalyst layer 20" is replaced with "the second catalyst layer 30".

The above descriptions with respect to the method of measuring the average length L₂₀ of the first catalyst layer 20 are also applied to the method of measuring the average length L₃₀ of the second catalyst layer 30. Upon application, "the first catalyst layer 20" and "the average length L₂₀" are replaced with "the second catalyst layer 30" and "the average length L₃₀", respectively.

The second catalyst layer 30 contains Rh as a catalytically-active component. Rh contained in the second catalyst layer 30 is in the form capable of functioning as a catalytically-active component, for example, in the form of a catalytically-active component containing Rh, such as metal Rh, an alloy containing Rh, a compound containing Rh (e.g., an oxide of Rh), or the like. From the viewpoint of improving the exhaust gas purification performance, it is preferable that the catalytically-active component containing Rh is in particulate form.

From the viewpoint of balancing the exhaust gas purification performance and the cost, the content of Rh in terms of metal in the second catalyst layer 30 is preferably 0.010% by mass or more and 5% by mass or less, more preferably 0.050% by mass or more and 3% by mass or less, and even more preferably 0.10% by mass or more and 2% by mass or less, based on the mass of the second catalyst layer 30.

The second catalyst layer 30 may contain a noble metal element other than Rh, as a catalytically-active component. Examples of the noble metal element other than Rh include Pt, Pd, Ir, Ru, Os, Au, Ag, and the like. The noble metal element other than Rh contained in the second catalyst layer 30 is in the form capable of functioning as a catalytically-active component, for example, in the form of a catalytically-active component containing the noble metal element other than Rh, such as metal, an alloy containing the noble metal element, a compound containing the noble metal element (e.g., an oxide of the noble metal element), or the like. From the viewpoint of improving the exhaust gas purification performance, it is preferable that the catalytically-active component containing the noble metal element other than Rh is in particulate form.

In the case where the second catalyst layer 30 contains Rh and the noble metal element other than Rh, Rh and the noble metal element other than Rh may form an alloy, thereby decreasing the active sites of Rh participating in exhaust gas purification performance. Accordingly, it is preferable that the second catalyst layer 30 is substantially free from the noble metal element other than Rh.

The expression that "the second catalyst layer 30 is substantially free from the noble metal element other than Rh" means that the content of the noble metal element other than Rh in terms of metal in the second catalyst layer 30 is preferably 0.050% by mass or less, and more preferably 0.010% by mass or less, based on the mass of the second catalyst layer 30. The lower limit is zero. The expression "the content of the noble metal element other than Rh in terms of metal in the second catalyst layer 30" means, in the case where the second catalyst layer 30 contains one noble metal element other than Rh, the content of the one noble metal element other than Rh in terms of metal, and means, in the case where the second catalyst layer 30 contains two or more noble metal elements other than Rh, the total content of the two or more noble metal elements other than Rh in terms of metal.

The content of each metal element in terms of metal in the second catalyst layer 30 is determined from the following formula: (Mass of each metal element in terms of metal in second catalyst layer 30) / (Mass of second catalyst layer 30) x 100. For example, the content of Rh in terms of metal in the second catalyst layer 30 is determined from the following formula: (Mass of Rh in terms of metal in second catalyst layer 30) / (Mass of second catalyst layer 30) x 100.

The content of each metal element in terms of metal in the second catalyst layer 30 can be determined in the same manner as the content of each metal element in terms of metal in the first catalyst layer 20.

The second catalyst layer 30 contains a complex oxide containing Ce, Zr, and Al (hereinafter, which may be referred to as a "Ce-Zr-Al-based complex oxide").

Whether or not the second catalyst layer 30 contains the Ce-Zr-Al-based complex oxide can be determined by a conventional method such as SEM-EDX. Specifically, when observation of the second catalyst layer 30 by SEM-EDX shows that Ce, Zr, and Al exist at the same location in the second catalyst layer 30, the second catalyst layer 30 can be judged as containing the Ce-Zr-Al-based complex oxide.

It is desirable that an air-fuel ratio (A/F) during supply to the internal combustion engine be controlled to be near a theoretical air-fuel ratio (stoichiometry). However, since an actual air-fuel ratio swings, with a stoichiometry at a center, to a rich side (fuel-rich atmosphere) or a lean side (fuel-lean atmosphere), depending on driving conditions of a motor vehicle or the like, an air-fuel ratio of exhaust gas similarly swings to a rich or lean side. Since the Ce-Zr-Al-based complex oxide has oxygen storage capacity, use of the Ce-Zr-Al-based complex oxide can mitigate fluctuations in the oxygen concentration of exhaust gas and expand the operating window of the catalyst. Further, since the Ce-Zr-Al-based complex oxide has heat resistance, under a high temperature environment, burial of Rh caused by aggregation of the Ce-Zr-Al-based complex oxide, disappearance of pores of the Ce-Zr-Al-based complex oxide (i.e., decrease in specific surface area), and the like, sintering of Rh, and the like can be suppressed. Therefore, the inclusion of the Ce-Zr-Al-based complex oxide in the second catalyst layer 30 can suppress a decrease in the exhaust gas purification performance of Rh after exposure to a high temperature environment (of the exhaust gas purification performance after exposure to a high temperature environment, in particular, the exhaust gas purification performance in a low temperature environment immediately after start-up of the internal combustion engine).

The Ce-Zr-Al-based complex oxide means a complex oxide containing Ce, Zr, and Al, wherein the content of Ce in terms of CeO₂ in the complex oxide is 1.0% by mass or more and 94.0% by mass or less, based on the mass of the complex oxide, and wherein the content of Zr in terms of ZrO₂ in the complex oxide is 1.0% by mass or more and 94.0% by mass or less, based on the mass of the complex oxide, and wherein the content of Al in terms of Al₂O₃ in the complex oxide is 5.0% by mass or more and 98.0% by mass or less, based on the mass of the complex oxide.

The Ce-Zr-Al-based complex oxide is, for example, in particulate form. The Ce-Zr-Al-based complex oxide is used as a carrier for a catalytically-active component. From the viewpoint of improving the supportability for a catalytically-active component, the Ce-Zr-Al-based complex oxide is preferably porous.

In the second catalyst layer 30, it is preferable that at least part of a catalytically-active component is supported on the Ce-Zr-Al-based complex oxide. The descriptions with respect to the meaning of "supported" and the confirmation method of "supported" are the same as described in the section

### < First catalyst layer 20>.

From the viewpoint of improving the oxygen storage capacity and the heat resistance, the content of Ce in terms of CeO₂ in the Ce-Zr-Al-based complex oxide is preferably 2.0% by mass or more and 40.0% by mass or less, more preferably 3.0% by mass or more and 20.0% by mass or less, and even more preferably 5.0% by mass or more and 15.0% by mass or less, based on the mass of the Ce-Zr-Al-based complex oxide.

From the viewpoint of improving the oxygen storage capacity and the heat resistance, the content of Zr in terms of ZrO₂ in the Ce-Zr-Al-based complex oxide is preferably 10.0% by mass or more and 70.0% by mass or less, more preferably 15.0% by mass or more and 60.0% by mass or less, and even more preferably 20.0% by mass or more and 50.0% by mass or less, based on the mass of the Ce-Zr-Al-based complex oxide.

From the viewpoint of improving the oxygen storage capacity and the heat resistance, the content of Al in terms of Al₂O₃ in the Ce-Zr-Al-based complex oxide is preferably 30.0% by mass or more and 60.0% by mass or less, more preferably 35.0% by mass or more and 55.0% by mass or less, and even more preferably 40.0% by mass or more and 50.0% by mass or less, based on the mass of the Ce-Zr-Al-based complex oxide.

From the viewpoint of improving the oxygen storage capacity and the heat resistance, the total of the content of Ce in terms of CeO₂, the content of Zr in terms of ZrO₂, and the content of Al in terms of Al₂O₃ in the Ce-Zr-Al-based complex oxide is preferably 70.0% by mass or more, more preferably 80.0% by mass or more, and even more preferably 90.0% by mass or more, based on the mass of the Ce-Zr-Al-based complex oxide. The upper limit is 100% by mass.

From the viewpoint of improving the oxygen storage capacity and the heat resistance, the ratio of the total of the content of Ce in terms of CeO₂ and the content of Zr in terms of ZrO₂ in the Ce-Zr-Al-based complex oxide to the content of Al in terms of Al₂O₃ in the Ce-Zr-Al-based complex oxide is preferably 0.5 or more and 1.2 or less, more preferably 0.6 or more and 1.1 or less, and even more preferably 0.7 or more and 1.0 or less.

The Ce-Zr-Al-based complex oxide may contain one metal element other than Ce, Zr, and Al, or two or more metal elements other than Ce, Zr, and Al. Examples of the metal element(s) other than Ce, Zr, and Al include a rare earth element other than Ce, and the like. Examples of the rare earth element other than Ce include Y, Pr, Sc, La, Nd, Sm, Eu, Gd, Tb, Dy, Ho, Er, Tm, Yb, Lu, and the like.

The content of the metal element(s) other than Ce, Zr, and Al in terms of oxide in the Ce-Zr-Al-based complex oxide can be appropriately adjusted in consideration of the content of Ce in terms of CeO₂, the content of Zr in terms of ZrO₂, and the content of Al in terms of Al₂O₃ in the Ce-Zr-Al-based complex oxide. From the viewpoint of improving the oxygen storage capacity and the heat resistance, the content of the metal element(s) other than Ce, Zr, and Al in terms of oxide in the Ce-Zr-Al-based complex oxide is preferably 30.0% by mass or less, more preferably 20.0% by mass or less, and even more preferably 15.0% by mass or less. The lower limit is zero. The expression "the content of the metal element(s) other than Ce, Zr, and Al in terms of oxide in the Ce-Zr-Al-based complex oxide" means, in the case where the Ce-Zr-Al-based complex oxide contains one metal element other than Ce, Zr, and Al, the content of the one metal element in terms of oxide, and, in the case where the Ce-Zr-Al-based complex oxide contains two or more metal elements other than Ce, Zr, and Al, the total content of the two or more metal elements in terms of oxide.

From the viewpoint of improving the heat resistance, the Ce-Zr-Al-based complex oxide preferably contains La. From the viewpoint of improving the heat resistance, the content of La in terms of La₂O₃ in the Ce-Zr-Al-based complex oxide is preferably 1.0% by mass or more, more preferably 2.0% by mass or more, and even more preferably 4.0% by mass or more, based on the mass of the Ce-Zr-Al-based complex oxide. The upper limit of the content of La in terms of La₂O₃ in the Ce-Zr-Al-based complex oxide can be appropriately adjusted in consideration of the content of Ce in terms of CeO₂, the content of Zr in terms of ZrO₂, and the content of Al in terms of Al₂O₃ in the Ce-Zr-Al-based complex oxide. The content of La in terms of La₂O₃ in the Ce-Zr-Al-based complex oxide is preferably 15.0% by mass or less, more preferably 10.0% by mass or less, and even more preferably 8.0% by mass or less. Each of these upper limits may be combined with any of the above-described lower limits.

From the viewpoint of improving the heat resistance, the Ce-Zr-Al-based complex oxide may contain a rare earth element other than Ce and La. From the viewpoint of improving the heat resistance, the content of the rare earth element other than Ce and La in terms of oxide in the Ce-Zr-Al-based complex oxide is preferably 1.0% by mass or more, more preferably 2.0% by mass or more, and even more preferably 4.0% by mass or more, based on the mass of the Ce-Zr-Al-based complex oxide. The upper limit of the content of the rare earth element other than Ce and La in terms of oxide in the Ce-Zr-Al-based complex oxide can be appropriately adjusted in consideration of the content of Ce in terms of CeO₂, the content of Zr in terms of ZrO₂, and the content of Al in terms of Al₂O₃ in the Ce-Zr-Al-based complex oxide. The content of the rare earth element other than Ce and La of in terms of oxide in the Ce-Zr-Al-based complex oxide is preferably 15.0% by mass or less, more preferably 10.0% by mass or less, and even more preferably 8.0% by mass or less. Each of these upper limits may be combined with any of the above-described lower limits. The expression "the content of the rare earth element other than Ce and La in terms of oxide in the Ce-Zr-Al-based complex oxide" means, in the case where the Ce-Zr-Al-based complex oxide contains one rare earth element other than Ce and La, the content of the one rare earth element in terms of oxide, and means, in the case where the Ce-Zr-Al-based complex oxide contains two or more rare earth elements other than Ce and La, the total content of the two or more rare earth elements in terms of oxide.

In the case where the composition of the Ce-Zr-Al-based complex oxide is known, the content of each element in terms of oxide in the Ce-Zr-Al-based complex oxide can be determined from the composition of the Ce-Zr-Al-based complex oxide.

In the case where the composition of the Ce-Zr-Al-based complex oxide is not known, the content of each element in terms of oxide in the Ce-Zr-Al-based complex oxide can be determined by analyzing a sample obtained from the second catalyst layer 30 by energy dispersive X-ray spectroscopy (EDX) to obtain an element mapping, and performing EDX elemental analysis on the designated particle in the obtained element mapping. Specifically, the content of each element in terms of oxide in the designated particle can be determined by qualitatively identifying (color-coding) a Ce-Zr-Al-based complex oxide particle and other oxide particle(s) by element mapping and performing composition analysis (elemental analysis) on the designated particle.

In the Ce-Zr-Al-based complex oxide, Ce may form a solid solution phase (e.g., a solid solution phase of CeO₂ and ZrO₂, a solid solution phase of CeO₂ and Al₂O₃, and a solid solution phase of CeO₂, ZrO₂, and Al₂O₃), may form a single phase (e.g., a single phase of CeO₂) which is a crystalline phase or an amorphous phase, or may form both of the solid solution phase and the single phase. However, it is preferable that at least part of Ce forms the solid solution phase.

In the Ce-Zr-Al-based complex oxide, Zr may form a solid solution phase (e.g., a solid solution phase of CeO₂ and ZrO₂, a solid solution phase of ZrO₂ and Al₂O₃, and a solid solution phase of CeO₂, ZrO₂, and Al₂O₃), may form a single phase (e.g., a single phase of ZrO₂) which is a crystalline phase or an amorphous phase, or may form both of the solid solution phase and the single phase. However, it is preferable that at least part of Zr forms the solid solution phase.

In the Ce-Zr-Al-based complex oxide, Al may form a solid solution phase (e.g., a solid solution phase of CeO₂ and Al₂O₃, a solid solution phase of ZrO₂ and Al₂O₃, and a solid solution phase of CeO₂, ZrO₂, and Al₂O₃), or a single phase (a single phase of Al₂O₃) which is a crystalline or an amorphous phase.

In the case where the Ce-Zr-Al-based complex oxide contains one metal element other than Ce, Zr, and Al, or two or more metal elements other than Ce, Zr, and Al, the metal element(s) other than Ce, Zr, and Al may form a solid solution phase (e.g., a solid solution phase of CeO₂ and an oxide(s) of the metal element(s) other than Ce, Zr, and Al, a solid solution phase of ZrO₂ and an oxide(s) of the metal element(s) other than Ce, Zr, and Al, and a solid solution phase of CeO₂, ZrO₂, and an oxide(s) of the metal element(s) other than Ce, Zr, and Al), or may form a single phase (a single phase of an oxide(s) of the metal element(s) other than Ce, Zr, and Al) which is a crystalline or an amorphous phase. However, it is preferable that at least part of the metal element(s) other than Ce, Zr, and Al forms the solid solution phase.

From the viewpoint of more effectively suppressing a decrease in the exhaust gas purification performance of Rh after exposure to a high temperature environment (of the exhaust gas purification performance after exposure to a high temperature environment, in particular, the exhaust gas purification performance in a low temperature environment immediately after start-up of the internal combustion engine), the content of the Ce-Zr-Al-based complex oxide in the second catalyst layer 30 is preferably 80.0% by mass or more, more preferably 85.0% by mass or more, and even more preferably 88.0% by mass or more, based on the mass of the second catalyst layer 30. The upper limit of the content of the Ce-Zr-Al-based complex oxide in the second catalyst layer 30 can be appropriately adjusted in consideration of the content of other components (e.g., Rh) in the second catalyst layer 30. The content of the Ce-Zr-Al-based complex oxide in the second catalyst layer 30 is preferably 98.0% by mass or less, more preferably 97.0% by mass or less, and even more preferably 95.0% by mass or less, based on the mass of the second catalyst layer 30. Each of these upper limits may be combined with any of the above-described lower limits.

In the case where the composition of raw materials used for forming the second catalyst layer 30 is known, the content of the Ce-Zr-Al-based complex oxide in the second catalyst layer 30 can be determined from the composition of raw materials used for forming the second catalyst layer 30.

In the case where the composition of raw materials used for forming the second catalyst layer 30 is not known, the content of the Ce-Zr-Al-based complex oxide in the second catalyst layer 30 can be determined using a conventional method such as SEM-EDX. A specific example is as mentioned below.

(1) Elemental analysis using a conventional method such as SEM-EDX is performed on a sample obtained from the second catalyst layer 30 to identify the types of constituent elements of the entire sample and determine the content (% by mass) of each identified element.
(2) Elemental mapping using a conventional method such as SEM-EDX is performed on a sample obtained from the second catalyst layer 30 to identify the types of particles contained in the sample (e.g., a Ce-Zr-Al-based complex oxide particle, and optionally other particle(s)).
(3) For each type of particle, elemental analysis by SEM-EDX is performed on a plurality of arbitrarily selected particles (e.g., 50 particles) to identify the types of constituent elements of the particles and to determine the content (% by mass) of each identified element. For each type of particle, the average value of the content (% by mass) of each element is determined.
(4) The content (% by mass) of each type of particle in the sample is calculated by drawing up and solving equations representing the relationship among the content (% by mass) of each element in the sample, the content (% by mass) of each element in each type of particle, and the content (% by mass) of each type of particle in the sample, and is defined as the content (% by mass) of each type of particle in the second catalyst layer 30.

The second catalyst layer 30 may contain one or two or more carriers other than the Ce-Zr-Al-based complex oxide (hereinafter, which may be referred to as "other carrier(s)"). In the case where the second catalyst layer 30 contains the other carrier(s), it is preferable that at least part of a catalytically-active component is supported on the other carrier(s). The descriptions with respect to the carrier (including the descriptions with respect to an inorganic oxide), the meaning of "supported", and the confirmation method of "supported" are the same as described in the section < First catalyst layer 20 >.

### < Conditions A and B >

The catalyst 1 satisfies at least one of the following Conditions A and B:
(A) the first catalyst layer 20 contains Sr, and the content of Sr in terms of metal in the first catalyst layer 20 is 0.1% by mass or more, based on the mass of the first catalyst layer 20; and
(B) the second catalyst layer 30 contains Sr, and the content of Sr in terms of metal in the second catalyst layer 30 is 0.1% by mass or more, based on the mass of the second catalyst layer 30.

Since Pd in the first catalyst layer 20 is susceptible to poisoning by phosphorus (e.g., phosphorus in engine oil), the exhaust gas purification performance of Pd in the first catalyst layer 20 (in particular, the exhaust gas purification performance of Pd in the first catalyst layer 20 in a low temperature environment immediately after start-up of the internal combustion engine) tends to decrease after exposure to phosphorus. In contrast, in the case where the catalyst 1 satisfies at least one of Conditions A and B, phosphorus is captured by Sr in the first catalyst layer 20 and/or Sr in the second catalyst layer 30, a decrease in the exhaust gas purification performance of Pd in the first catalyst layer 20 after exposure to phosphorus (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine) can be suppressed. The inventors examined various alkaline earth metal elements in order to suppress phosphorus-induced poisoning, and found that Mg and Ca, compared to Sr, react more readily with Al₂O₃ which may be present in the first catalyst layer 20 or the second catalyst layer 30, resulting in a higher tendency for a decrease in heat resistance, that Ba, compared to Sr, reacts more readily with Al₂O₃ which may be present in the first catalyst layer 20 or the second catalyst layer 30, resulting in a higher tendency for a decrease in heat resistance and in the exhaust gas purification performance of Rh, and that Sr, compared to Mg, Ca, and Ba, reacts less readily with Al₂O₃ which may be present in the first catalyst layer 20 or the second catalyst layer 30, resulting in a lower tendency for a decrease in heat resistance and in the exhaust gas purification performance of Rh and Pd. Based on these findings, the inventors selected Sr.

The Ce-Zr-Al-based complex oxide has a high bulk density, meaning that its apparent volume per unit mass is small. Therefore, when the second catalyst layer 30 is exposed to phosphorus, the Ce-Zr-Al-based complex oxide in the second catalyst layer 30 has a low physical barrier property against phosphorus intrusion. Thus, as the content of the Ce-Zr-Al-based complex oxide in the second catalyst layer 30 increases, phosphorus more easily passes through the second catalyst layer 30 and reaches the first catalyst layer 20, with the results that Pd in the first catalyst layer 20 is more susceptible to poisoning by phosphorus. Accordingly, in the case where the content of the Ce-Zr-Al-based complex oxide in the second catalyst layer 30 is 80.0% by mass or more, the effects of the catalyst 1 resulting from satisfying at least one of Conditions A and B are significant.

From the viewpoint of more effectively suppressing a decrease in the exhaust gas purification performance of Pd in the first catalyst layer 20 after exposure to phosphorus (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine), in Condition A, the content of Sr in terms of metal in the first catalyst layer 20 is preferably 0.3% by mass or more, and more preferably 0.5% by mass or more, based on the mass of the first catalyst layer 20.

From the viewpoint of more effectively suppressing a decrease in the exhaust gas purification performance of Pd in the first catalyst layer 20 after exposure to phosphorus (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine), in Condition B, the content of Sr in terms of metal in the second catalyst layer 30 is preferably 0.3% by mass or more, and more preferably 0.5% by mass or more, based on the mass of the second catalyst layer 30.

It is desirable that an air-fuel ratio (A/F) during supply to the internal combustion engine be controlled to be near the theoretical air-fuel ratio (stoichiometry). However, since an actual air-fuel ratio swings, with a stoichiometry at a center, to a rich side (fuel-rich atmosphere) or a lean side (fuel-lean atmosphere), depending on driving conditions of a motor vehicle or the like, an air-fuel ratio of exhaust gas similarly swings to a rich or lean side. Sr has the ability to capture phosphorus, and to adsorb NOx, when exhaust gas is in a lean condition, and release NOx, when exhaust gas is in a rich condition. Therefore, in the case where the amount of Sr is excessive, when exhaust gas is switched from a lean condition to a rich condition, a large amount of NOx may be released from Sr at once, making it difficult for the catalyst 1 to sufficiently purify the released NOx. Hereinafter, the NOx released from Sr when exhaust gas is switched from a lean condition to a rich condition may be referred to as "transient NOx". Accordingly, it is preferred to adequately limit the upper limit of the amount of Sr to prevent an excessive increase in the amount of transient NOx, and to keep the amount of transient NOx within a range that catalyst 1 can purify.

From the viewpoint of more effectively preventing an excessive increase in the amount of transient NOx, in Condition A, the content of Sr in terms of metal in the first catalyst layer 20 is preferably 7.0% by mass or less, more preferably 4.0% by mass or less, and even more preferably 3.0% by mass or less, based on the mass of the first catalyst layer 20. Each of these upper limits may be combined with any of the above-described lower limits.

From the viewpoint of more effectively preventing an excessive increase in the amount of transient NOx, in Condition B, the content of Sr in terms of metal in the second catalyst layer 30 is preferably 7.0% by mass or less, more preferably 4.0% by mass or less, and even more preferably 3.0% by mass or less, based on the mass of the second catalyst layer 30. Each of these upper limits may be combined with any of the above-described lower limits.

In a preferred embodiment, the content of Sr in terms of metal in the first catalyst layer 20 is 0.1% by mass or more and 7.0% by mass or less, based on the mass of the first catalyst layer 20, and/or the content of Sr in terms of metal in the second catalyst layer 30 is 0.1% by mass or more and 7.0% by mass or less, based on the mass of the second catalyst layer 30. This embodiment makes it possible to effectively suppress a decrease in the exhaust gas purification performance of Pd in the first catalyst layer 20 after exposure to phosphorus (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine), and to effectively prevent an excessive increase in the amount of transient NOx.

In a more preferred embodiment, the content of Sr in terms of metal in the first catalyst layer 20 is 0.1% by mass or more and 4.0% by mass or less, based on the mass of the first catalyst layer 20, and/or the content of Sr in terms of metal in the second catalyst layer 30 is 0.1% by mass or more and 4.0% by mass or less, based on the mass of the second catalyst layer 30. This embodiment makes it possible to effectively suppress a decrease in the exhaust gas purification performance of Pd in the first catalyst layer 20 after exposure to phosphorus (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine), and to effectively prevent an excessive increase in the amount of transient NOx.

In the case where the catalyst 1 satisfies Condition A, the catalyst 1 may satisfy Condition B, or may not satisfy Condition B. The expression that "the catalyst 1 does not satisfy Condition B" encompasses an embodiment wherein the second catalyst layer 30 does not contain Sr, and an embodiment wherein the second catalyst layer 30 contains Sr and the content of Sr in terms of metal in the second catalyst layer 30 is less than 0.1% by mass, based on the mass of the second catalyst layer 30. In the latter embodiment, the content of Sr in terms of metal in the second catalyst layer 30 is preferably 0.05% by mass or less, more preferably 0.03% by mass or less, and even more preferably 0.01% by mass or less, based on the mass of the second catalyst layer 30.

In the case where the catalyst 1 satisfies Condition B, the catalyst 1 may satisfy Condition A, or may not satisfy Condition A. The expression that "the catalyst 1 does not satisfy Condition A" encompasses an embodiment wherein the first catalyst layer 20 does not contain Sr, and an embodiment wherein the first catalyst layer 20 contains Sr and the content of Sr in terms of metal in the first catalyst layer 20 is less than 0.1% by mass, based on the mass of the first catalyst layer 20. In the latter embodiment, the content of Sr in terms of metal in the first catalyst layer 20 is preferably 0.05% by mass or less, more preferably 0.03% by mass or less, and even more preferably 0.01% by mass or less, based on the mass of the first catalyst layer 20.

The expression that "the catalyst 1 satisfies at least one of Conditions A and B" encompasses
(a) an embodiment wherein the catalyst 1 satisfies Conditions A and B,
(b) an embodiment wherein the catalyst 1 satisfies Condition A and does not satisfy Condition B, and
(c) an embodiment wherein the catalyst 1 satisfies Condition B and does not satisfy Condition A.

In the case where the catalyst 1 satisfies Condition B, phosphorus in exhaust gas can be captured by Sr in the second catalyst layer 30 before reaching the first catalyst layer 20. As a result, compared to the case where the first catalyst layer 20 satisfies Condition A, phosphorus-induced poisoning of Pd in the first catalyst layer 20 can be more effectively prevented, providing an advantage. On the other hand, in the case where the catalyst 1 satisfies Condition B, Sr in the second catalyst layer 30 has the disadvantage of reducing the exhaust gas purification performance of Rh in the second catalyst layer 30. In contrast, in the case where the catalyst 1 satisfies Condition A, Sr in the first catalyst layer 20 does not have the disadvantage of reducing the exhaust gas purification performance of Pd in the first catalyst layer 20, although Sr in the first catalyst layer 20 is less effective in preventing phosphorus-induced poisoning of Pd in the first catalyst layer 20, compared to the case where the catalyst 1 satisfies Condition B. Thus, from the viewpoint of achieving the prevention of phosphorus-induced poisoning of Pd by Sr and the prevention of a decrease of exhaust gas purification performance of a noble metal element by Sr in a balanced manner, among Embodiments a to c, Embodiments a and b (i.e., the catalyst 1 satisfies at least Condition A of Conditions A and B) are preferred, and Embodiment b (i.e., the catalyst 1 satisfies Condition A and does not satisfy Condition B) is more preferred.

The content of Sr in terms of metal in the first catalyst layer 20 and the content of Sr in terms of metal in the second catalyst layer 30 can be determined in the same manner as the content of each metal element in terms of metal in the first catalyst layer 20.

In the case where the catalyst 1 satisfies Condition A, the first catalyst layer 20 contains one or two or more Sr sources, and in the case where the catalyst 1 satisfies Condition B, the second catalyst layer 30 contains one or two or more Sr sources.

Each Sr source is not particularly limited as long as it is a compound containing Sr. The form in which Sr exists is not particularly limited. Sr can exist in one or two or more forms selected from, for example, an oxide, a carbonate, and a sulfate. From the viewpoint of more effectively enhancing the effects of Sr, Sr preferably exists in one or two forms selected from SrO and SrCO₃.

In the case where the catalyst 1 satisfies Condition A, the catalyst 1 preferably satisfies the following condition C:
(C) the ratio of the content (% by mass) of Sr in terms of metal in the first catalyst layer 20 based on the mass of the first catalyst layer 20 to the content (% by mass) of the Ce-Zr-Al-based complex oxide in the second catalyst layer 30 based on the mass of the second catalyst layer 30 (the content (% by mass) of Sr in terms of metal in the first catalyst layer 20) / the content (% by mass) of the Ce-Zr-Al-based complex oxide in the second catalyst layer 30) is 0.0010 or more and 0.0800 or less.

The phenomenon in which Pd in the first catalyst layer 20 is susceptible to poisoning by phosphorus due to the high bulk density of the Ce-Zr-Al-based complex oxide is particularly pronounced when the second catalyst layer 30 contains a large amount of the Ce-Zr-Al-based complex oxide. Accordingly, when the amount of Sr in the first catalyst layer 20 is adjusted to be proportional to the amount of the Ce-Zr-Al-based complex oxide in the second catalyst layer 30, i.e., when the catalyst 1 satisfies Condition C, phosphorus-induced poisoning of Pd in the first catalyst layer 20 can be more effectively prevented.

From the viewpoint of more effectively preventing phosphorus-induced poisoning of Pd in the first catalyst layer 20, the ratio of the content (% by mass) of Sr in terms of metal in the first catalyst layer 20 based on the mass of the first catalyst layer 20 to the content (% by mass) of the Ce-Zr-Al-based complex oxide in the second catalyst layer 30 based on the mass of the second catalyst layer 30 is preferably 0.0010 or more and 0.0800 or less, more preferably 0.0020 or more and 0.0500 or less, and even more preferably 0.0040 or more and 0.0130 or less.

In the case where the catalyst 1 satisfies Condition B, the catalyst 1 preferably satisfies the following Condition D:
(D) the ratio of the content (% by mass) of Sr in terms of metal in the second catalyst layer 30 based on the mass of the second catalyst layer 30 to the content (% by mass) of the Ce-Zr-Al-based complex oxide in the second catalyst layer 30 based on the mass of the second catalyst layer 30 (the content (% by mass) of Sr in terms of metal in the second catalyst layer 30) / the content (% by mass) of the Ce-Zr-Al-based complex oxide in the second catalyst layer 30) is 0.0010 or more and 0.0800 or less.

The phenomenon in which Pd in the first catalyst layer 20 is susceptible to poisoning by phosphorus due to the high bulk density of the Ce-Zr-Al-based complex oxide is particularly pronounced when the second catalyst layer 30 contains a large amount of the Ce-Zr-Al-based complex oxide. Accordingly, when the amount of Sr in the second catalyst layer 30 is adjusted to be proportional to the amount of the Ce-Zr-Al-based complex oxide in the second catalyst layer 30, i.e., when the catalyst 1 satisfies Condition D, phosphorus-induced poisoning of Pd in the first catalyst layer 20 can be more effectively prevented.

From the viewpoint of more effectively preventing phosphorus-induced poisoning of Pd in the first catalyst layer 20, the ratio of the content (% by mass) of Sr in terms of metal in the second catalyst layer 30 based on the mass of the second catalyst layer 30 to the content (% by mass) of the Ce-Zr-Al-based complex oxide in the second catalyst layer 30 based on the mass of the second catalyst layer 30 is preferably 0.0010 or more and 0.0800 or less, more preferably 0.0020 or more and 0.0500 or less, and even more preferably 0.0040 or more and 0.0130 or less.

### < Action of Catalyst >

In the catalyst 1, the second catalyst layer 30 is provided on the upside of the first catalyst layer 20. Thus, exhaust gas that has flowed in from the end (opening) on the exhaust gas inflow side of the cell 13 contacts with the second catalyst layer 30, and then contacts with the first catalyst layer 20. When the exhaust gas contacts with the second catalyst layer 30, the exhaust gas is purified by a catalytically-active component (e.g., Rh) in the second catalyst layer 30, and when the exhaust gas contacts with the first catalyst layer 20, the exhaust gas is purified by a catalytically-active component (e.g., Pd) in the first catalyst layer 20. Since the second catalyst layer 30 contains the Ce-Zr-Al-based complex oxide, a decrease in the exhaust gas purification performance of Rh after exposure to a high temperature environment (of the exhaust gas purification performance after exposure to a high temperature environment, in particular, the exhaust gas purification performance in a low temperature environment immediately after start-up of the internal combustion engine) can be suppressed. In addition, since the catalyst 1 satisfies at least one of Conditions A and B, a decrease in the exhaust gas purification performance of Pd in the first catalyst layer 20 after exposure to phosphorus (e.g., phosphorus in engine oil) (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine) can be suppressed. Accordingly, the catalyst 1 can suppress a decrease in the exhaust gas purification performance of Rh after exposure to a high temperature environment (of the exhaust gas purification performance after exposure to a high temperature environment, in particular, the exhaust gas purification performance in a low temperature environment immediately after start-up of the internal combustion engine), and a decrease in the exhaust gas purification performance of Pd in the first catalyst layer 20 after exposure to phosphorus (e.g., phosphorus in engine oil) (of the exhaust gas purification performance of Pd in the first catalyst layer 20 after exposure to phosphorus, in particular, the exhaust gas purification performance of Pd in the first catalyst layer 20 in a low temperature environment immediately after start-up of the internal combustion engine).

### < Production of Catalyst >

The catalyst 1 can be produced by forming the first catalyst layer 20 on the substrate 10 and then forming the second catalyst layer 30 on the upside of the first catalyst layer 20.

The first catalyst layer 20 can be formed by mixing a Pd supply source (e.g., a Pd salt), optionally a Sr supply source (e.g., a Sr salt), and optionally other component(s) (e.g., an inorganic oxide, a binder, a solvent, and the like) to prepare a first slurry, coating the substrate 10 with the first slurry, drying the resulting material, and calcining the resulting material.

The second catalyst layer 30 can be formed by mixing a Rh supply source (e.g., a Rh salt), a Ce-Zr-Al-based complex oxide, optionally a Sr supply source (e.g., a Sr salt), and optionally other component(s) (e.g., an inorganic oxide other than the Ce-Zr-Al-based complex oxide, a binder, a solvent, and the like) to prepare a second slurry, coating the first catalyst layer 20 with the second slurry, drying the resulting material, and calcining the resulting material.

Examples of the Pd supply source include a Pd salt. Examples of the Pd salt include a nitrate, an ammine complex salt, an acetate, a chloride, and the like. Examples of the Rh supply source include a Rh salt. Examples of the Rh salt include a nitrate, an ammine complex salt, an acetate, a chloride, and the like. Examples of the Sr supply source include a Sr salt. Examples of the Sr salt include a nitrate, an acetate, a carbonate, a chloride, and the like. Examples of the binder include alumina sol, zirconia sol, titania sol, silica sol, ceria sol, and the like. Examples of the solvent include water, an organic solvent, and the like.

The drying temperature is, for example, 70°C or more and 150°C or less, and the drying time is, for example, 5 minutes or more and 1 hour or less. The calcination temperature is, for example, 200°C or more and 700°C or less, and the calcination time is, for example, 0.5 hours or more and 5 hours or less. The calcination can be carried out, for example, in an air atmosphere.

### EXAMPLES

### < Example 1 >

### (1) Preparation of slurry for lower layer formation

An OSC material with the following composition (a Ce-Zr-based complex oxide, hereinafter, which may be referred to as "CZ") was prepared.

Content of Ce in terms of CeO₂: 40.0% by mass, Content of Zr in terms of ZrO₂: 50.0% by mass, and Content of a rare earth element other than Ce in terms of oxide: 10.0% by mass

To a mixing vessel, an aqueous solution of palladium nitrate, the Ce-Zr-based complex oxide, La₂O₃-modified alumina (modification amount of La₂O₃: 1% by mass), strontium nitrate, alumina sol, and water were added, mixed and stirred to prepare a slurry for lower layer formation. The contents of components in the slurry for lower layer formation were adjusted so that the content of Pt in terms of metal was 4.0% by mass, the content of the Ce-Zr-based complex oxide was 40.0% by mass, the content of the La₂O₃-modified alumina was 45.4% by mass, the content of Sr in terms of metal was 0.5% by mass (the content in terms of SrO was 0.6% by mass), and the solid content of the alumina sol was 10.0% by mass, based on the mass (100% by mass) of a lower layer after calcination. Note that strontium nitrate is converted to strontium oxide by calcination.

### (2) Formation of lower layer

A flow-through type substrate was prepared, which included cells each extending in the axial direction and separated by a partition wall having a thickness of 50 to 70 µm, at a density of 600 cells/inch² in a plane perpendicular to the axial direction, and had a volume of 1.0 L.

The flow-through type substrate was dipped in the slurry for lower layer formation. The flow-through type substrate coated with the slurry for lower layer formation was dried at 150°C for 0.5 hours, and then calcined at 500°C for 1 hour to form a lower layer. The mass of the lower layer per unit volume of the portion of the flow-through type substrate provided with the lower layer was 100 g/L.

### (3) Preparation of slurry for upper layer formation

An OSC material with the following composition (a Ce-Zr-Al-based complex oxide, hereinafter, which may be referred to as "CZA") was prepared.

Content of Ce in terms of CeO₂: 10.0% by mass, Content of Zr in terms of ZrO₂: 35.0% by mass, Content of Al in terms of Al₂O₃: 45.0% by mass, Content of La in terms La₂O₃; 5.0% by mass, and Content of a rare earth element other than Ce and La in terms of oxide: 5.0% by mass

To a mixing vessel, an aqueous solution of rhodium nitrate, the Ce-Zr-Al-based complex oxide, alumina sol, and water were added, mixed and stirred to prepare a slurry for upper layer formation. The contents of components in the slurry for upper layer formation were adjusted so that the content of Rh in terms of metal was 1.0% by mass, the content of the Ce-Zr-Al-based complex oxide was 89.0% by mass, and the solid content of the alumina sol was 10.0% by mass, based on the mass (100% by mass) of an upper layer after calcination.

### (4) Formation of upper layer

The flow-through type substrate on which the lower layer was formed was dipped in the slurry for upper layer formation. The flow-through type substrate coated with the slurry for upper layer formation was dried at 150°C for 0.5 hours, and then calcined at 500°C for 1 hour to form an upper layer on the lower layer. The mass of the upper layer per unit volume of the portion of the flow-through type substrate provided with the upper layer was 80 g/L.

As described above, an exhaust gas purification catalyst including the lower layer formed on the flow-through type substrate and the upper layer formed on the lower layer was produced.

### < Examples 2 to 4 >

Exhaust gas purification catalysts of Examples 2 to 4 were produced in the same manner as in Example 1, except that in the slurry for forming lower layer formation, the amount of strontium nitrate added was adjusted so that the content of Sr in terms of metal was 1.0% by mass (Example 2), 2.5% by mass (Example 3), or 5.0% by mass (Example 4), based on the mass (100% by mass) of the lower layer after calcination, and the amount of the La₂O₃-modified alumina added was reduced in proportion to the increased amount of strontium nitrate.

### < Comparative Example 1 >

Preparation of the slurry for lower layer formation and formation of the lower layer was carried out in the same manner as in Example 2.

An OSC material with the following composition (a Ce-Zr-based complex oxide, hereinafter, which may be referred to as "CZ") was prepared.

Content of Ce in terms of CeO₂: 15.0% by mass, Content of Zr in terms of ZrO₂: 75.0% by mass, and Content of a rare earth element other than Ce in terms of oxide: 10.0% by mass

To a mixing vessel, an aqueous solution of rhodium nitrate, the Ce-Zr-based complex oxide, La₂O₃-modified alumina (modification amount of La₂O₃: 1% by mass), alumina sol, and water were added, mixed and stirred to prepare a slurry for upper layer formation. The contents of components in the slurry for upper layer formation were adjusted so that the content of Rh in terms of metal was 1.0% by mass, the content of the Ce-Zr-based complex oxide was 50.0% by mass, the content of the La₂O₃-modified alumina was 39.0% by mass, and the solid content of the alumina sol was 10.0% by mass, based on the mass (100% by mass) of an upper layer after calcination. An upper layer was formed in the same manner as in Example 2, except that the slurry for upper layer formation was used.

### < Comparative Example 2 >

An exhaust gas purification catalyst of Comparative Example 2 was produced in the same manner as in Example 1, except that in the slurry for lower layer formation, no strontium nitrate was added and the amount of the La₂O₃-modified alumina added was increased in proportion to the reduced amount of strontium nitrate.

### < Test Example >

### (1) Heat treatment of Catalyst

Using a quartz tubular furnace, the exhaust gas purification catalyst cored to 30 mL was subjected to a heat treatment under the conditions of 1000°C x 20 hours in an atmosphere containing 10% by volume H₂O in the following FC mode. The catalyst after the heat treatment was used as an evaluation sample.

FC mode: Model gas having the following composition (3 L/min) and air (3 L/min) were made to flow alternately.

Model gas flow rate: C₃H₆ 6 mL/min, O₂ 71 mL/min, and N₂ 2923 mL/min (3 L/min in total).

10% by volume H₂O: Water was vaporized from a tank containing water and incorporated as water vapor into the model gas or the air. The saturated water vapor pressure was adjusted to a water vapor amount of the above-mentioned % by volume by regulating the temperature.

### (2) Phosphorus-induced poisoning of Catalyst

In the quartz tubular furnace, a phosphorus-induced poisoning treatment was performed at 750°C for 20 hours in an atmosphere containing 10% by volume H₂O under the following gas flow rate condition, while a solution containing zinc dialkyldithiophosphate was sprayed from the upstream side of the catalyst after the heat treatment described in (1) above.

Gas flow rate condition: N₂ 11.9 L/min, CO₂ 3.0 L/min, and O₂ 0.1 L/min (15 L/min in total).

10% by volume H₂O: Water was vaporized from a tank containing water and incorporated as water vapor into the model gas or the air. The saturated water vapor pressure was adjusted to a water vapor amount of the above-mentioned % by volume by regulating the temperature.

### (3) Evaluation of exhaust gas purification performance (T50)

The catalyst treated with (1) or (2) above was placed in an exhaust gas path. While exhaust model gas (CO: 0.50 vol%, H₂: 0.17 vol%, O₂: 0.50 vol%, NO: 400 vol ppm, C₃H₆: 1180 vol ppm, CO₂: 14 vol%, H₂O: 10 vol%, and N₂: balance) was allowed to flow through at a space velocity of 100000/h, the purification rates of total hydrocarbons (THC), nitrogen oxides (NOx) and carbon monoxide (CO) were continuously measured with the temperature increase at an increasing temperature of 20°C/minute to 500°C. The temperature at which each of the purification rates of total hydrocarbons (THC), nitrogen oxides (NOx) and carbon monoxide (CO) reached 50% (light-off temperature T50) (°C) was determined. The light-off temperature T50 was determined while the temperature was rising. The results are shown in Table 1.

### (4) Evaluation of transient NOx emission

The catalyst treated with (2) above was placed in an exhaust gas path. The atmosphere was switched in the order of the lean condition described below, N₂, and the rich condition described below. Each gas was allowed to flow through at a space velocity of 10000/h at 400°C for 5 minutes.
Lean condition: NO 1000 vol ppm, O₂ 5000 vol ppm, N₂ balance
Rich condition: CO 5000 vol ppm, N₂ balance

The total amount of NO and NO₂ emitted when the atmosphere was switched to the rich condition was evaluated as transient NOx emission (µmol).

### [Table 1]

**Table 1**

| | Upper Layer | Lower Layer | | Exhaust Gas Purification Performance (T50) (°C) | | | | | | Transient NOx Emission (µmol) |
|---|---|---|---|---|---|---|---|---|---|---|
| | | | | After Heat Treatment | | | After Phosphorus Poisoning | | | |
| | Composition | Composition | Content of Sr (% by mass) | CO | THC | NOx | CO | THC | NOx | |
| Example 1 | Rh/CZA | Pd/(CZ+La₂O₃-modified Al₂O₃)+Sr | 0.5 | 241.2 | 243.6 | 229.8 | 259.1 | 260.4 | 242.6 | 0.8 |
| Example 2 | Rh/CZA | Pd/(CZ+La₂O₃-modified Al₂O₃)+Sr | 1.0 | 241.5 | 244.1 | 230.1 | 261.3 | 262.9 | 242.7 | 1.0 |
| Example 3 | Rh/CZA | Pd/(CZ+La₂O₃-modified Al₂O₃)+Sr | 2.5 | 241.8 | 244.6 | 230.4 | 261.6 | 263.4 | 243.0 | 1.9 |
| Example 4 | Rh/CZA | Pd/(CZ+La₂O₃-modified Al₂O₃)+Sr | 5.0 | 240.6 | 243.6 | 230.4 | 260.4 | 262.7 | 241.2 | 2.4 |
| Comparative Example 1 | Rh/(CZ+La₂O₃-modified Al₂O₃) | Pd/(CZ+La₂O₃-modified Al₂O₃)+Sr | 1.0 | 250.1 | 251.7 | 233.9 | 265.7 | 265.5 | 243.8 | 1.1 |
| Comparative Example 2 | Rh/CZA | Pd/(CZ+La₂O₃-modified Al₂O₃) | 0 | 241.4 | 243.9 | 229.9 | 274.3 | 273.6 | 245.4 | 0.6 |

The exhaust gas purification catalysts of Examples 1 to 4 include a substrate, a lower layer containing Pd, and an upper layer containing Rh and a Ce-Zr-Al complex oxide, and satisfy the following Condition A:
(A) the lower layer contains Sr, and the content of Sr in terms of metal in the lower layer is 0.1% by mass or more, based on the mass of the lower layer.

The exhaust gas purification catalyst of Comparative Example 1 includes a substrate, a lower layer containing Pd, and an upper layer containing Rh, and satisfies the following Condition A:
(A) the lower layer contains Sr, and the content of Sr in terms of metal in the lower layer is 0.1% by mass or less, based on the mass of the lower layer.

However, in the exhaust gas purification catalyst of Comparative Example 1, the upper layer contains a Ce-Zr-based complex oxide, but does not contain a Ce-Zr-Al-based complex oxide.

The exhaust gas purification catalyst of Comparative Example 2 includes a substrate, a lower layer containing Pd, and an upper layer containing Rh and a Ce-Zr-Al-based complex oxide. However, the exhaust gas purification catalyst of Comparative Example 2 does not satisfy the following Condition A:
(A) the lower layer contains Sr, and the content of Sr in terms of metal in the lower layer is 0.1% by mass or more, based on the mass of the lower layer.

Further, the exhaust gas purification catalyst of Comparative Example 2 does not satisfy the following Condition B:
(B) the upper layer contains Sr, and the content of Sr in terms of metal in the upper layer is 0.1% by mass or more, based on the mass of the upper layer.

As shown in Table 1, compared to the exhaust gas purification catalyst of Comparative Example 1, the exhaust gas purification catalysts of Examples 1 to 4 can more effectively suppress a decrease in exhaust gas purification performance after exposure to a high temperature environment (of the exhaust gas purification performance after exposure to a high temperature environment, in particular, the exhaust gas purification performance in a low temperature environment immediately after start-up of an internal combustion engine).

As shown in Table 1, compared to the exhaust gas purification catalyst of Comparative Example 2, the exhaust gas purification catalysts of Example 1 to 4 can more effectively suppress a decrease in exhaust gas purification performance after exposure to phosphorus (of the exhaust gas purification performance after exposure to phosphorus, in particular, the exhaust gas purification performance in a low temperature environment immediately after start-up of the internal combustion engine).

As described above, the exhaust gas purification catalysts of Examples 1 to 4 can suppress a decrease in exhaust gas purification performance after exposure to a high temperature environment (of the exhaust gas purification performance after exposure to a high temperature environment, in particular, the exhaust gas purification performance in a low temperature environment immediately after start-up of the internal combustion engine), and a decrease in exhaust gas purification performance after exposure to phosphorus (of the exhaust gas purification performance after exposure to phosphorus, in particular, the exhaust gas purification performance in a low temperature environment immediately after start-up of the internal combustion engine).

### DESCRIPTION OF REFERENCE SIGNS

- P: Exhaust pipe of internal combustion engine
- 1: Exhaust gas purification catalyst
- 10: Substrate
- 11: Tubular member
- 12: Partition wall
- 13: Cell
- 20: First catalyst layer
- 30: Second catalyst layer

## Claims

1. An exhaust gas purification catalyst, comprising a substrate, a first catalyst layer provided on the substrate, and a second catalyst layer provided on an upside of the first catalyst layer,
wherein the first catalyst layer comprises Pd,
wherein the second catalyst layer comprises Rh and a complex oxide comprising Ce, Zr, and Al, and
wherein the exhaust gas purification catalyst satisfies at least one of the following conditions A and B:
(A) the first catalyst layer comprises Sr, and a content of Sr in terms of metal in the first catalyst layer is 0.1% by mass or more, based on a mass of the first catalyst layer; and
(B) the second catalyst layer comprises Sr, and a content of Sr in terms of metal in the second catalyst layer is 0.1% by mass or more, based on a mass of the second catalyst layer.

2. The exhaust gas purification catalyst according to claim 1,
wherein in the condition A, the content of Sr in terms of metal in the first catalyst layer is 0.1% by mass or more and 7.0% by mass or less, based on the mass of the first catalyst layer; and
wherein in the condition B, the content of Sr in terms of metal in the second catalyst layer is 0.1% by mass or more and 7.0% by mass or less, based on the mass of the second catalyst layer.

3. The exhaust gas purification catalyst according to claim 2,
wherein in the condition A, the content of Sr in terms of metal in the first catalyst layer is 0.1% by mass or more and 4.0% by mass or less, based on the mass of the first catalyst layer; and
wherein in the condition B, the content of Sr in terms of metal in the second catalyst layer is 0.1% by mass or more and 4.0% by mass or less, based on the mass of the second catalyst layer.

4. The exhaust gas purification catalyst according to claim 1 or 2, wherein the complex oxide comprises La, and wherein a content of La in terms of La₂O₃ in the complex oxide is 1.0% by mass or more, based on a mass of the complex oxide.

5. The exhaust gas purification catalyst according to claim 1 or 2,
wherein, in a case where the exhaust gas purification catalyst satisfies the condition A, the exhaust gas purification catalyst satisfies following condition C:
(C) a ratio of the content of Sr in terms of metal in the first catalyst layer based on the mass of the first catalyst layer to a content of the complex oxide in the second catalyst layer based on the mass of the second catalyst layer is 0.0010 or more and 0.0800 or less; and
wherein, in a case where the exhaust gas purification catalyst satisfies the condition B, the exhaust gas purification catalyst satisfies following condition D:
(D) a ratio of the content of Sr in terms of metal in the second catalyst layer based on the mass of the second catalyst layer to a content of the complex oxide in the second catalyst layer based on the mass of the second catalyst layer is 0.0010 or more and 0.0800 or less.

6. The exhaust gas purification catalyst according to claim 1 or 2, wherein a content of the complex oxide in the second catalyst layer is 80.0% by mass or more, based on the mass of the second catalyst layer.

7. The exhaust gas purification catalyst according to claim 1 or 2, wherein a content of Al in terms of Al₂O₃ in the complex oxide is 30.0% by mass or more and 60.0% by mass or less, based on a mass of the complex oxide.

8. The exhaust gas purification catalyst according to claim 1 or 2, wherein the exhaust gas purification catalyst satisfies at least the condition A of the conditions A and B.
